# EUROPEAN PATENT SPECIFICATION

(11) **EP 0 464 405 B1**
(45) Date of publication and mention of the grant of the patent: **14.09.1994**
(21) Application number: 91109511.5
(22) Date of filing: 10.06.1991
(51) Int. Cl.: G01P 3/487

(54) **Device for determining the relative rotational speed between the races of a rolling contact bearing**
Vorrichtung zur Erfassung der Relativgeschwindigkeit zwischen dem Innen- und dem Aussenring eines Wälzlagers
Dispositif pour déterminer la vitesse relative de rotation entre les surfaces de roulement d'un palier

(30) Priority: 04.07.1990 IT 6749090
(43) Date of publication of application: 08.01.1992
(73) Proprietor: SKF INDUSTRIE S.P.A., I-10123 Torino (IT)
(72) Inventor: Moretti, Roberto, I-10020 Cambiano Torino (IT); Varvello, Angelo, I-10144 Torino (IT)
(74) Representative: Lotti, Giorgio

(56) References cited:
- EP-A- 0 250 275
- DE-A- 1 281 549
- GB-A- 1 504 791
- US-A- 3 786 272

## Description

This invention relates to a device for determining the relative rotational speed between the races of a rolling contact bearing.

It is known that lately installation of special control circuits on vehicles has become very popular; these special circuits are of the kind:
- ABS, that have the aim of preventing the vehicle's wheels from blocking during the braking;
- ASR, that are meant to control the correct traction of the vehicle;
- speed gauge device, such as "speedometer";
- distance gauge devices, such as "mileometer".

The gauge systems that are conventionally used are realised with common basic components, such as: phonic wheel, detection sensor, local processing unit and oleodynamic shunt connection unit.

The phonic wheel is usually a toothed ring that is mounted on the rotating part to be kept under control while the sensor, may it be active or passive, is installed on the chassis facing the toothed part of the phonic ring at a prearranged distance.

The electric signals coming from the single sensor are sent to the local processing unit that determines, in the case of ABS systems, the differences between the revolving speeds of the wheels.

The passive kind of sensors that are used to measure the reluctance variations need no power supply; anyway, these sensors necessarily have to be mounted outside the bearing and thus they are located in a position that is not protected from eventual crashes, polluting agents and other dangerous damages.

In such arrangements, the sensor is negatively affected by the metallic particles due to the wear of the brakes that are located nearby the sensors and by the high temperatures that are produced by the brake disks. Moreover the sensors need a proper adjustment to be done by the user during the assembling.

This kind of sensors is further handicapped in that it is impossible to measure revolving speeds down to 0 km/h.

US patent No. 3,786,272 discloses a rotary electrical pulse generator having a pair of Hall probes mounted in a support block and a rotor mounted on the block having a pair of axially spaced magnet rings. The rings provide an axial gap receiving the Hall probes to generate electrical signals as the rotor rotates.

DE-A-1 281 549 relates to a rotary electrical pulse generator comprising a rotary magnetic ring having a plurality of peripheral axially disposed magnetic poles. The magnetic ring is axially displaced from a stationary radial plate supporting a Hall probe.

The above identified devices have a rather cumbersome structure that does not render them suitable for application on the races of rolling contact bearings.

EP-A-0 250 275 refers to a device for measuring the revolving speed or angular displacement between the races of a rolling contact bearing according to the pre-characterising portion of Claim 1. A sensor is carried by a screen mounted on the stationary race. The sensor faces radially a multipolar magnetic ring supported by a non-magnetic ring integral with the rotating race.

It is an object of the present invention to disclose a device that allows to overcome the drawbacks of the prior art.

In particular, it is an object of this invention to disclose a device for determining the relative rotational speed between the races of a rolling contact bearing as indicated in Claim 1.

Preferred embodiments of the device according to the present invention will now be described referring to the enclosed drawings, in which:
- Fig. 1: shows an embodiment of the device;
- Figs. 2 to 5: are partial perspective views of different embodiments of the device; and
- Fig. 6: is a different embodiment of the device shown in Fig. 1.

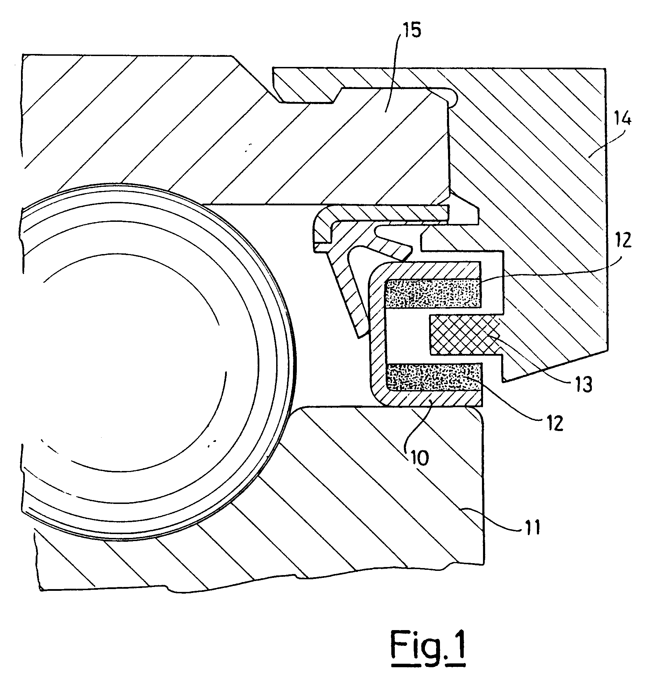

As shown in Fig. 1, a rolling contact bearing for supporting the wheel of a vehicle has a first ring or screen 10, integral with the rotating race 11 of the bearing. The ring or screen 10 carries a double magnetized ring 12 with couples of poles opposite in sign, between which a Hall effect magnetic sensor or a magnetoresistive sensor 13 is inserted and carried by a second screen or support 14 integral with the fixed race 15 of the bearing.

The Hall effect magnetic sensor 13, that has integrated electronic control circuits, is power supplied with the vehicle's voltage.

The signal that is fed to the local processing unit is a function of the n variations of the magnetic field to which the sensor is exposed during a revolution of the bearing. The Hall effect sensor may be of the kind: linear, unipolar, bipolar, bipolar with memory.

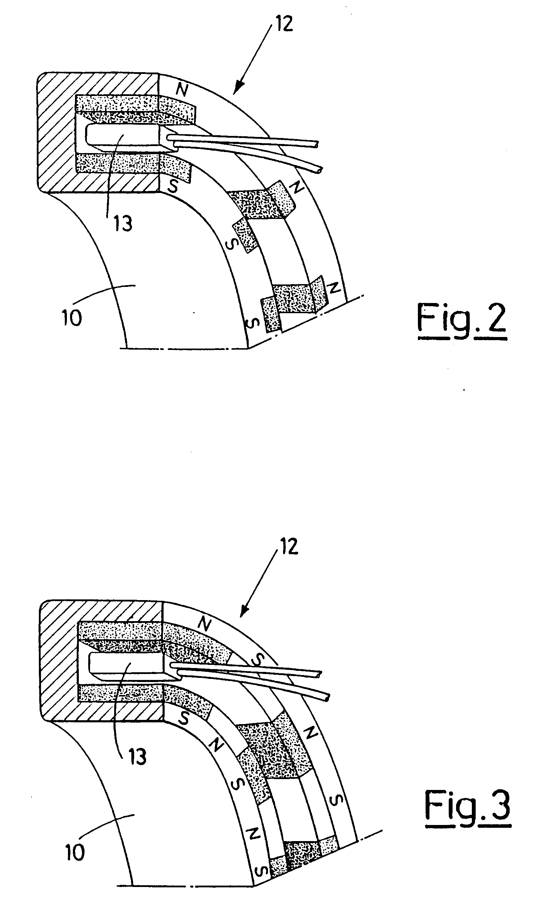

The magnetic sensor 13, as shown in Fig. 2, is immerged in the magnetic field that is generated by the pole pieces of the n couples of opposite poles alternatively disposed, as shown in the embodiment of Fig. 3.

As shown in Fig. 2, the poles of each ring have the same sign, but it is understood that they can also be realized with alternating signs, NSN on one ring and respectively SNS on the facing ring for all the circumferential extent of the double ring 12.

The double magnetized ring 12 can be made of rubber, filled with magnetic elements and fixed or vulcanized to a supporting ring that can also act as the closing memeber of the magnetic flux. The double ring 12 can otherwise be made of plastic and filled with magnetic elements, or made of magnetic sinters or even of elementar magnets.

The material of which the ring is made can have isotropic or anisotropic characteristics.

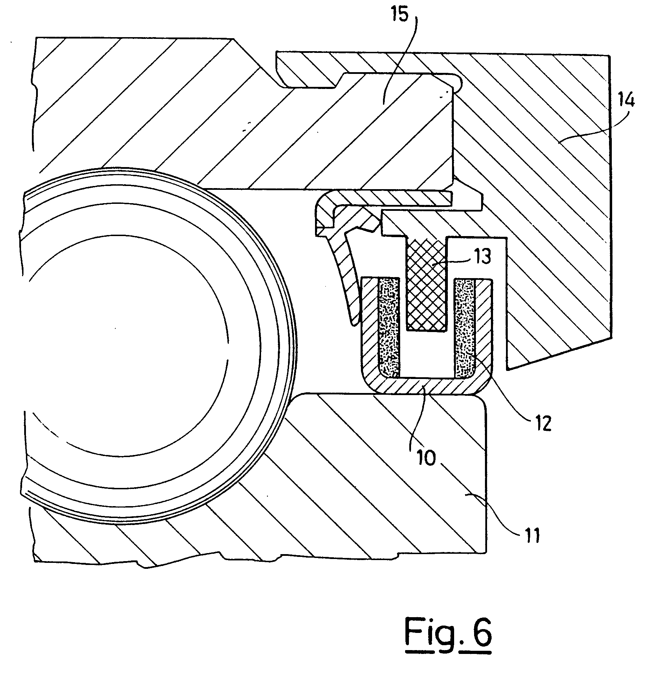

The double ring 12 may have either a magnetic field that is radial with respect to the axis of the bearing, as shown in Fig. 1, or axial as shown in fig. 6, without changing any of the benefits of this invention.

The rotation of the double magnetized ring 12 causes the Hall effect magnetic sensor 13 to detect variations of the intensity of the magnetic field in the case of Fig. 2, and variations and inversions of the magnetic field in the case of Fig. 3.

After some necessary processing, the signal that is proportional to the speed is emitted by the electronics that are integrated with the Hall effect sensor 13, and is sent to the local processing unit.

The sensor unit can also consist of two or more magnetic sensors 13 with integrated electronics in order to allow detection of the rotation by using a smaller number of magnetic poles, the frequencies obtained by the single ones being equal.

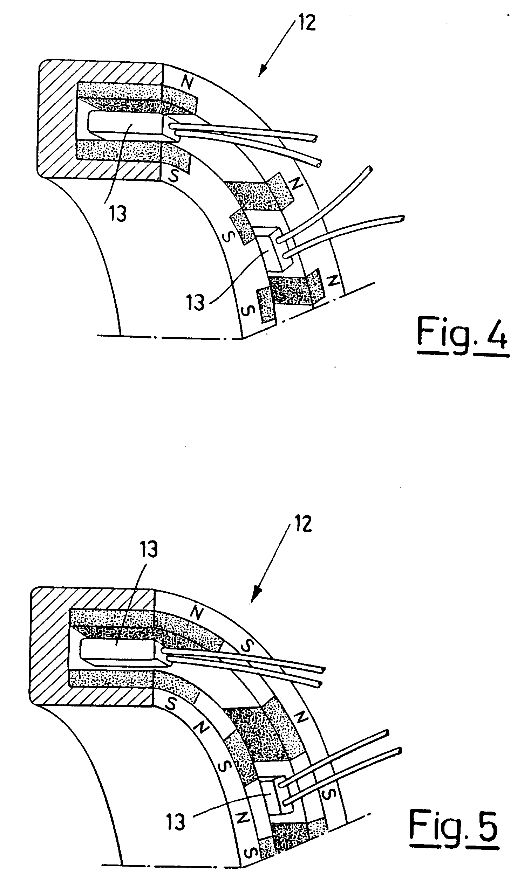

For this application the sensors have to be shifted by a suitable angle or located in correspondence of two opposite couples as shown schematically in Figs. 4 and 5 that correspond to the embodiments of Figs. 2 and 3.

The same multi-sensing system can also be utilized for detecting the direction of rotation of the wheel by adding a further output.

## Claims

1. A device for determining the relative rotational speed between the races (11,15) of a rolling contact bearing, comprising a magnetised ring (12) with couples of magnetic poles carried by a first screen (10) of annular shape fixed to the rotating race (11) of the bearing, said magnetised ring (12) facing at least one magnetic sensor (13) carried by a second screen (14) fixed to the stationary race (15) of the bearing;
characterised in that the magnetised ring (12) is a double ring formed by two coaxially spaced apart magnetised rings with couples of poles opposite in sign, the two rings being carried by said first screen (10); the magnetic sensor (13) being inserted between the two spaced apart rings (12) and the first screen (10) so as to be protected towards the outside of the bearing by means of said spaced apart rings (12), said first screen (10) and said second screen (14).

2. A device according to claim 1 wherein the two axially spaced magnetised rings (12) are fitted on opposite facing walls of said first screen (10).

## Patentansprüche

1. Vorrichtung zum Erfassen der Relativgeschwindigkeit zwischen dem Innen- und dem Außenring (11, 15) eines Wälzkontaktlagers, das einen magnetisierten Ring (12) mit Magnetpolpaaren beinhaltet, der durch eine erste kreisförmige Abschirmung (10) getragen wird, die auf dem rotierenden Lagerring (11) des Lagers befestigt ist, wobei der magnetisierte Ring (12) mindestens einem Magnetsensor (13) gegenüberliegt, der durch eine zweite Abschirmung (14) getragen wird, die auf dem stationären Ring (15) des Lagers befestigt ist;
dadurch gekennzeichnet, daß der magnetisierte Ring (12) ein Doppelring ist, der durch zwei koaxial voneinander beabstandete magnetische Ringe mit entgegengesetzt gepolten Polpaaren gebildet wird, wobei die zwei Ringe durch die erste Abschirmung (10) getragen werden; daß der Magnetsensor (13) zwischen den zwei voneinander beabstandeten Ringen (12) und der ersten Abschirmung (10) eingesetzt ist, um mittels den voneinander beabstandeten Ringen (12), der ersten Abschirmung (10) und der zweiten Abschirmung (14) gegenüber dem Lager nach außen hin geschützt zu sein.

2. Vorrichtung nach Anspruch 1, bei der die axial beabstandeten magnetisierten Ringe (12) auf gegenüberliegenden Stirnwänden der ersten Abschirmung (10) befestigt sind.

## Revendications

1. Dispositif pour déterminer la vitesse de rotation relative entre les bagues de roulement (11, 15) d'un palier à roulement, comprenant un anneau magnétisé (12) avec des couples de pôles magnétiques supporté par un premier écran (10) de forme annulaire fixé la bague de roulement tournante (11) du palier, ledit anneau magnétisé (12) étant en regard d'au moins un capteur magnétique (13) supporté par un second écran (14) fixé à la bague de roulement fixe (15) du palier ; caractérisé en ce que, l'anneau magnétisé (12) est un double anneau formé par deux anneaux magnétisés séparés coaxialement avec des couples de pôles opposés en signe, les deux anneaux étant supportés par ledit premier écran (10) ; le capteur magnétique (13) étant inséré entre les deux anneaux séparés (12) et le premier écran 10), de façon à être protégé vers l'extérieur du palier au moyen desdits anneaux séparés (12), dudit premier écran (10) et dudit second écran (14).

2. Dispositif selon la revendication 1, dans lequel les deux anneaux magnétisés axialement espacés (12) sont montés sur des parois en regard opposées dudit premier écran (10).
